# EUROPÄISCHE PATENTSCHRIFT

(11) **EP 1 092 523 B1**
(45) Veröffentlichungstag und Bekanntmachung des Hinweises auf die Patenterteilung: **24.03.2004**
(21) Anmeldenummer: 00120701.8
(22) Anmeldetag: 22.09.2000
(51) Int. Cl.: B29C 45/14, B29C 31/00

(54) **Handlingsystem und Verfahren für eine Kunststoff-Spritzgiessmaschine**
Handling-system for an injection moulding machine
Appareil de manipulation pour une machine de moulage par injection

(30) Priorität: 15.10.1999 DE 19949851
(43) Veröffentlichungstag der Anmeldung: 18.04.2001
(73) Patentinhaber: HEKUMA GmbH, 85386 Eching (DE)
(72) Erfinder: Herbst, Richard, 85386 Eching (DE)
(74) Vertreter: Klingseisen, Franz, Dipl.-Ing.

(56) Entgegenhaltungen:
- EP-A- 0 463 217
- EP-A- 0 893 221
- DE-A- 4 102 934

## Beschreibung

Die Erfindung betrifft eine Kunststoff-Spritzgießmaschine mit einem mindestens zwei Werkzeughälften umfassenden Werkzeug und einem bei geöffnetem Werkzeug zwischen die Werkzeughälften einfahrbaren Handlingsystem zum Überführen eines Gegenstandes zwischen dem Handlingsystem und einer vorbestimmten Werkzeughälfte, wobei das Handlingsystem eine in ihm lose gelagerte Übergabeplatte umfaßt und das Handlingsystem derart an die vorbestimmte Werkzeughälfte heranfahrbar ist, daß vor der Übergabe des Gegenstandes eine an der vorbestimmten Werkzeughälfte befindliche erste Bezugsmarke mit einer an der Übergabeplatte befindlichen zweiten Bezugsmarke in Eingriff bringbar ist.

Die Erfindung betrifft ferner ein Handlingsystem mit Mitteln zum Überführen eines Gegenstandes zwischen dem Handlingsystem und einer vorbestimmten Position, wobei das Handlingsystem eine in ihm lose gelagerte Übergabeplatte umfaßt und derart an die vorbestimmte Position heranfahrbar ist, daß vor der Übergabe des Gegenstandes eine an der vorbestimmten Position befindliche erste Bezugsmarke mit einer an der Übergabeplatte befindlichen zweiten Bezugsmarke in Eingriff bringbar ist.

Die Erfindung betrifft weiterhin ein Verfahren zum Überführen eines Gegenstandes zwischen einem Handlingsystem und einer vorbestimmten Werkzeughälfte einer Kunststoff-Spritzgießmaschine, die ein Werkzeug mit mindestens zwei Werkzeughälften umfaßt und bei der bei geöffnetem Werkzeug ein Handlingsystem zwischen die Werkzeughälften eingefahren wird, wobei das Handlingsystem eine in ihm lose gelagerte Übergabeplatte umfaßt und das Handlingsystem derart an die vorbestimmte Werkzeughälfte herangefahren wird, daß vor der Übergabe des Gegenstandes eine an der vorbestimmten Werkzeughälfte befindliche erste Bezugsmarke mit einer an der Übergabeplatte befindlichen zweiten Bezugsmarke in Eingriff gebracht wird.

Schließlich betrifft die Erfindung ein Verfahren zum Überführen eines Gegenstandes zwischen einem Handlingsystem und einer vorbestimmten Position, wobei das Handlingsystem eine in ihm lose gelagerte Übergabeplatte umfaßt und derart an die vorbestimmte Position herangefahren wird, daß vor der Übergabe des Gegenstandes eine an der vorbestimmten Position befindliche erste Bezugsmarke mit einer an der Übergabeplatte befindlichen zweiten Bezugsmarke in Eingriff gebracht wird.

Eine Kunststoff-Spritzgießmaschine, ein Handlingsystem sowie Verfahren der vorstehend genannten Art sind bekannt.

Bei Kunststoff-Spritzgießmaschinen werden sogenannte Handlingsysteme eingesetzt, die bei geöffnetem Werkzeug zwischen die dann voneinander beabstandeten Werkzeughälften einfahren, um dort unterschiedliche Aufgaben auszuführen.

Die wichtigste Aufgabe eines Handlingsystems ist es, nach dem Öffnen des Werkzeugs die fertig gespritzten Kunststoffteile aus den Formhohlräumen des Werkzeugs zu übernehmen, wenn diese Kunststoffteile von den Auswerferstiften aus den Hohlräumen ausgeworfen werden. Zu diesem Zwecke sind die Handlingsysteme mit einem zwischen die Werkzeughälften einfahrbaren Arm versehen, der mit entsprechenden Aufnahmemitteln ausgestattet ist. Die Aufnahmemittel können dabei mechanisch, pneumatisch oder dgl. ausgestaltet sein.

Diese Konfiguration ist prinzipiell unabhängig davon, wie das Werkzeug der Spritzgießmaschine im einzelnen ausgestaltet ist, also ob es sich z.B. um ein nur aus zwei Werkzeughälften bestehendes Werkzeug oder um ein sogenanntes Etagenwerkzeug mit einem Mittelpaket und seitlich angesetzten Werkzeughälften handelt. Bei diesen unterschiedlichen Einsatzfällen braucht das Handlingsystem nur in entsprechender Weise vervielfacht oder sonstwie ausgestaltet zu werden.

Eine weitere Aufgabe von Handlingsystemen besteht darin, vor Beginn eines Spritzzyklus in die dann noch leeren Formhohlräume des Werkzeugs bestimmte Teile einzulegen. Diese Teile werden dann anschließend bei geschlossenem Werkzeug mit flüssigem Kunststoff umspritzt, so daß die fertigen Kunststoffgegenstände mit den eingespritzten Einlegeteilen versehen sind.

Einlegeteile können dabei z.B. sogenannte "Labels" sein, die als Deckflächen von Scheckkarten oder dgl. verwendet werden. Einlegeteile können aber auch z.B. elektrische Steckerelemente, also Kontaktstifte oder dgl. sein, die beim Spritzvorgang in einen Sockel eines elektrischen Bauelementes eingespritzt werden. Darüber hinaus können Einlegeteile aber auch Verstärkungsteile, Scharniere, mechanische Befestigungselemente oder dgl. sein. Insoweit ist die Erfindung nicht eingeschränkt.

Bei all diesen Aufgaben von Handlingsystemen besteht ein grundsätzliches Problem darin, daß beim Einfahren des Handlingsystems bzw. des Arms des Handlingsystems zwischen die Werkzeughälften eine Lagekoordination zwischen dem Handlingsystem bzw. Arm einerseits und derjenigen vorbestimmten Werkzeughälfte andererseits hergestellt werden muß, an die das Handlingsystem heranfahren soll. Da Handlingsysteme gerade bei komplexen Spritzgießmaschinen mit entsprechenden Außenabmessungen entsprechend lang auskragende Arme aufweisen, ist trotz präziser Lageantriebe nicht immer eine genaue Koordinierung der Bewegungen möglich.

Die vorstehend genannten Probleme treten auch außerhalb des Werkzeugs auf, wenn das Handlingsystem mit seinem Arm eine außerhalb der Kunststoff-Spritzgießmaschine befindliche Position anfährt. An dieser außen gelegenen Position werden beispielsweise zuvor aus dem Werkzeug entnommene, fertig gespritzte Kunststoffgegenstände an weitere Stationen übergeben oder es werden beim Einlegen von Teilen dort diese Einlegeteile aufgenommen, um anschließend in die Formhohlräume des Werkzeugs überführt zu werden. In jedem Falle ist dann auch außerhalb des Werkzeugs ein exaktes Anfahren der Position in dieser außerhalb der Maschine liegenden Station erforderlich. Aber selbst wenn keine derartige Station außerhalb der Maschine vorhanden sein sollte, ist eine präzise Lageeinhaltung auch deswegen erforderlich, weil eine genaue Ausgangsposition für den Arm des Handlingsystems vorhanden sein muß, damit dieser anschließend präzise zu seiner Endposition zwischen den Werkzeughälften gefahren werden kann.

Die vorstehend genannten Probleme betreffen Handlingsysteme auch bei allgemeinen Anwendungen, also solchen außerhalb des Einsatzbereiches bei Kunststoff-Spritzgießmaschinen. Die Erfindung ist daher nicht auf dieses Anwendungsgebiet beschränkt sondern betrifft sämtliche Anwendungen von Handlingsystemen ungeachtet ihres Einsatzgebietes.

Es ist daher bekannt, die vorbestimmte Werkzeughälfte einerseits und die ihr zugewandte Seite des Handlingsystems andererseits mit jeweils einer Bezugsmarke zu versehen, die miteinander in Eingriff gebracht werden müssen, um auf diese Weise sicherzustellen, daß bei der Übergabe des Gegenstandes eine genaue relative Positionierung zwischen Handlingsystem und Werkzeughälfte vorliegt. Auch dies gilt wiederum unabhängig davon, ob unter "Übergabe eines Gegenstandes" die Entnahme eines fertig gespritzten Kunststoffteils oder das Einlegen eines Einlegeteils oder dgl. verstanden wird.

Im einfachsten Fall bestehen die Bezugsmarken an der Werkzeughälfte einerseits und dem Handlingsystem andererseits aus zueinander komplementären mechanischen Elementen, bspw. einer Bohrung und einem Zapfen. Die Bohrung ist dabei zweckmäßigerweise mit einer Einführschräge bzw. einem Einführkonus versehen und der Zapfen ist vorne entsprechend angespitzt. Wenn dann das Handlingsystem in radialer Richtung (bezogen auf die Achse der Spritzgießmaschine) zwischen die Werkzeughälften einfährt und sich dann in axialer Richtung auf die vorbestimmte Werkzeughälfte zu bewegt und wenn dann ferner die Bezugsmarken nicht exakt miteinander fluchten, so wird über die erwähnte Einführschräge der Bohrung sowie die ebenfalls erwähnte Anspitzung des Zapfens erreicht, daß der Zapfen auch bei einem bestimmten Versatz noch in die Bohrung einfährt.

Es ist leicht einsehbar, daß eine solche Korrekturbewegung innerhalb einer Radialebene zu mechanischen Zwängen im Handlingsystem führt, weil das Handlingsystem dabei aus der an sich angefahrenen Sollposition heraus zwangsweise verschoben wird.

Es ist daher ebenfalls bekannt, im Handlingsystem bzw. im einfahrenden Arm eine separate Übergabeplatte für die Übergabe des Gegenstandes vorzusehen und diese Übergabeplatte im Handlingsystem bzw. Arm innerhalb dieser Radialebene lose, z.B. elastisch zu lagern.

Dann wird bei einer Korrekturbewegung im vorstehend erläuterten Sinne aus einer angefahrenen Sollposition heraus nur die Übergabeplatte innerhalb des Verfahrbereiches ihrer losen Lagerung geringfügig verschoben, während auf das Handlingsystem im übrigen kein mechanischer Zwang ausgeübt wird.

Diese bekannten Handlingsysteme haben jedoch den Nachteil, daß die lose Lagerung der Übergabeplatte im Handlingsystem beim schnellen Verfahren des Handlingsystems zu Problemen führt, insbesondere dann, wenn das Handlingsystem stark beschleunigt oder stark abgebremst wird. Dann schlägt nämlich die lose gelagerte Übergabeplatte mit ihrer beweglichen Lagerung jeweils an den Endanschlag, wobei dies bei einem Handlingvorgang gleich mehrfach erfolgt, nämlich bei jedem Anfahren und jedem Abbremsen. Dabei muß man sich nämlich vor Augen halten, daß es im Interesse einer minimalen Zykluszeit der Kunststoff-Spritzgießmaschine erwünscht, das Handlingsystem möglichst schnell, d.h. mit möglichst großen Beschleunigungen und Verzögerungen zu bewegen.

Das unkontrollierte Hin- und Herschwingen der Übergabeplatte im Handlingsystem macht sich dabei nicht nur akustisch bemerkbar, es führt auch innerhalb kürzester Zeit zum Verschleiß der elastischen Lagerung und damit zu deren Ausfall. Dies wiederum hat Stillstandszeiten der Kunststoff-Spritzgießmaschine zur Folge, so daß die effektive Produktivität der Kunststoff-Spritzgießmaschine trotz minimaler Zykluszeit ganz oder teilweise wieder verloren gehen kann.

Aus dem Dokument DE 41 02 934 A1 sind eine Gießvorrichtung zum Eingießen von Halbleiterelementen in Harz sowie ein Verfahren zum Aufsetzen von Leiterrahmen auf eine Gießform bekannt. Bei dieser bekannten Gießvorrichtung ist eine Trägerplatte in den Zwischenraum zwischen zwei in Offenstellung befindliche Druckplatten einführbar. Die Trägerplatte trägt auf der der einen Druckplatte zuweisenden Seite einen entlang von mindestens zwei Koordinatenrichtungen verstellbaren Kreuztisch, mit dem insbesondere ein horizontaler Objektträger in einer Ebene parallel zur Hauptebene der Druckplatten verfahrbar ist. Auf diese Weise soll erreicht werden, daß ein vom horizontalen Objektträger gehaltener Leiterrahmen, der ein Halbleiterelement trägt, so auf die ihm zuweisende Druckplatte aufgesetzt wird, daß auf der Druckplatte befindliche Ausrichtstifte gerade durch Einstell- bzw. Paßöffnungen im Leiterrahmen passen. Für diesen Zentriervorgang ist an der betreffenden Druckplatte ein separater Bezugs- oder Einstellstift vorgesehen, der im wesentlichen mit einer Bezugs- bzw. Einstellöffnung des horizontalen Objektträgers fluchtet. Diese Öffnung ist im Durchmesser wesentlich größer als der zugehörige Stift. Auf der dem Stift gegenüber liegenden Seite der Öffnung ist eine Kamera angeordnet, mit der die Position des Stiftes innerhalb der Öffnung erkannt werden kann. Im Falle einer außermittigen Position des Stiftes werden die Verstellelemente des Kreuztisches so angesteuert, daß der horizontale Objektträger mit seiner Bezugs- bzw. Einstellöffnung koaxial zum Bezugs- bzw. Einstellstift verläuft, woraufhin dann der Leiterrahmen mit den Einstell- bzw. Paßöffnungen auf die Ausrichtstifte der zugehörigen Druckplatte aufgesetzt werden kann.

Aus dem Dokument EP 0 893 221 A2 ist ein Werkzeug für Spritz- oder Druckguß bekannt, das aus mehreren Konturplatten besteht. Beim Zusammensetzen der Konturplatten greifen auf der einen Konturplatte angeordnete Paßstifte in Ausnehmungen auf der anderen Konturplatte. Einige dieser Ausnehmungen sind so ausgebildet, daß sie ein gewisses Spiel für die in sie eingreifenden Paßstifte ermöglichen, und zwar zur Kompensation von thermisch bedingten relativen Formänderungen, wenn eine kalte Platte und eine warme Platte zusammengefügt werden.

Aus dem Dokument EP 0 463 217 A1 ist eine Gießform zum Herstellen von Zahnbürsten bekannt. Bei dieser aus mehreren Teilen bestehenden Gießform ist die Formgebung zweier relativ zueinander beweglicher Teile so gewählt, daß im zusammengefügten Zustand der Gießform eine formschlüssige Verbindung zwischen diesen Teilen vorliegt.

Der Erfindung liegt daher die Aufgabe zugrunde, eine Kunststoff-Spritzgießmaschine sowie ein Verfahren der eingangs genannten Art dahingehend weiterzubilden, daß die vorstehend beschriebenen Nachteile vermieden werden.

Insbesondere soll es möglich werden, auch bei einer Fehlpositionierung der Übergabeplatte in der angefahrenen Sollstellung eine Lagekorrektur ohne merkliche mechanische Rückwirkungen auf das Handlingsystem vorzunehmen, und zwar ohne dabei in Kauf nehmen zu müssen, daß die Verfahrgeschwindigkeit, insbesondere die Beschleunigungen und Verzögerungen, begrenzt werden müssen.

Bei einer Kunststoff-Spritzgießmaschine der eingangs genannten Art wird diese Aufgabe erfindungsgemäß dadurch gelöst, daß die lose Lagerung mittels einer Kupplung überbrückbar ist.

Bei einem Handlingsystem der eingangs genannten Art wurde diese Aufgabe erfindungsgemäß dadurch gelöst, daß die lose Lagerung mittels einer Kupplung überbrückbar ist.

Bei einem Verfahren der eingangs als erstes genannten Art wird die Aufgabe erfindungsgemäß dadurch gelöst, daß die lose Lagerung mindestens beim Einfahren des Handlingsystems zwischen die Werkzeughälften überbrückt wird.

Bei einem Verfahren der eingangs als zweites genannten Art wird die Aufgabe schließlich erfindungsgemäß dadurch gelöst, daß die lose Lagerung mindestens beim Anfahren der vorbestimmten Position überbrückt wird.

Die der Erfindung zugrunde liegende Aufgabe wird auf diese Weise vollkommen gelöst.

Wenn nämlich die lose Lagerung der Übergabeplatte immer dann blockiert wird, wenn sie beim "Einfädeln" der Bezugsmarken nicht benötigt wird, so sind von daher keine einschränkenden Randbedingungen für die Verfahrgeschwindigkeit, die Verfahrbeschleunigung und die Verfahrverzögerung gegeben. Vielmehr kann das Handlingsystem mit der konstruktiv maximal möglichen Geschwindigkeit, Beschleunigung und Verzögerung verfahren werden, ohne daß dies einen Einfluß auf die mechanische Stabilität der Übergabeplatte hätte, die während dieser Bewegungsvorgänge durch Schließen der Kupplung mechanisch mit dem Handlingsystem verriegelt ist.

Die Erfindung hat damit erhebliche Vorteile insbesondere dann, wenn bei Mehrfachwerkzeugen mit einer sehr großen Anzahl von Formhohlräumen zum gleichzeitigen Herstellen einer Vielzahl von typischerweise kleineren Kunststoffteilen entsprechend große Übergabeplatten erforderlich sind, die mit entsprechend großen Massen behaftet sind. Auch in derartigen Fällen kann man bei Einsatz der Erfindung mit sehr schnellen Bewegungsvorgängen arbeiten.

Bei einer bevorzugten Ausführungsform der Erfindung wird die lose Lagerung durch eine elastische Lagerung dargestellt.

Diese Maßnahme hat den Vorteil, daß die lose Übergabeplatte nach dem Ausführen einer elastischen Bewegung zumindest näherungsweise immer an dieselbe Ausgangslage zurückkehrt, so daß keine all zu großen Bewegungskorrekturen erforderlich sind. Es ist jedoch auch möglich, die Lagerung plastisch oder gebremst oder sonstwie auszubilden.

Bei der bevorzugten Ausgestaltung der erfindungsgemäßen Spritzgießmaschine ist die Übergabeplatte in einem Arm des Handlingsystems gelagert.

Diese an sich bekannte Maßnahme hat den Vorteil, daß man nur einen schmalen Arm zwischen den Werkzeughälften verfahren muß, so daß diese nur um einen relativ geringen Betrag geöffnet werden müssen. Erfindungsgemäß ist aber auch möglich, die Übergabeplatte insgesamt durch den Arm des Handlingsystems zu bilden, d.h., daß der gesamte Arm im Handlingsystem lose, beispielsweise elastisch oder sonstwie gelagert ist.

Bei einer weiter bevorzugten Ausgestaltung der erfindungsgemäßen Maschine weist die vorbestimmte Werkzeughälfte eine in Offenstellung des Werkzeugs frei liegende Oberfläche auf und die Übergabeplatte ist in der von der Oberfläche aufgespannten Ebene elastisch gelagert.

Diese Maßnahme hat den Vorteil, daß die Übergabeplatte nicht nur entlang einer Achse sondern entlang einer durch zwei Achsen aufgespannten Ebene elastisch gelagert ist und entsprechend mittels der Kupplung verriegelt werden kann, mit der Folge, daß auch komplexere Ein- und Ausfahrvorgänge in der beschriebenen Weise beherrscht werden können.

Bei weiterhin bevorzugten Ausführungsformen der erfindungsgemäßen Maschine sowie des erfindungsgemäßen Verfahrens ist die Kupplung zeitlich überschneidend mit dem in Eingriff Bringen der Bezugsmarken lösbar bzw. zeitlich überschneidend mit einem außer Eingriff Bringen der Bezugsmarken überbrückbar.

Diese Maßnahme hat den Vorteil, daß die mechanische Verriegelung der Übergabeplatte selbsttätig vom Handlingsystem bzw. Arm an die vorbestimmte Werkzeughälfte übergeben wird, so daß die Übergabe des Gegenstandes zwischen Werkzeughälfte und Übergabeplatte in exakter räumlicher Ausrichtung dieser Elemente zueinander vorgenommen werden kann. Dies erhöht z.B. die Lagegenauigkeit von eingespritzten Kontaktelementen elektrischer Bauteile, was für derartige Bauteile ein wesentliches Qualitätsmerkmal ist.

Darüber hinaus haben diese Maßnahmen den Vorteil, daß die elastische Lagerung der Übergabeplatte wirklich nur für das absolute Minimum an Zeit freigegeben wird, nämlich den Übergabevorgang für den Gegenstand zwischen vorbestimmter Werkzeughälfte und Übergabeplatte, während ansonsten die Übergabeplatte immer am Handlingsystem bzw. dem Arm mechanisch verrastet ist.

Entsprechendes gilt auch für eine weitere Variante der erfindungsgemäßen Maschine bzw. des erfindungsgemäßen Verfahrens, wonach nämlich die Kupplung selbsttätig beim Heranfahren des Handlingsystems an die vorbestimmte Werkzeughälfte lösbar ist bzw. gelöst wird.

Diese Maßnahme hat den weiteren wesentlichen Vorteil, daß eine separate Steuerung für die Kupplung überhaupt nicht notwendig ist, weil die entsprechenden Kupplungselemente durch die Heranfahrbewegung selbst betätigt werden, so daß der Lösevorgang und der anschließende Schließvorgang der Kupplung in optimaler Weise bewirkt werden kann, ohne daß dafür eine komplizierte Steuerung notwendig ist.

Bei einem mechanischen Ausführungsbeispiel dieser Variante ist die Kupplung mittels einer relativ zur Übergabeplatte in Heranfahrrichtung des Handlingsystems an die vorbestimmte Werkzeughälfte längsverschieblichen Stange verschiebbar, wobei die Stange aus einer der vorbestimmten Werkzeughälfte gegenüberliegenden Oberfläche der Übergabeplatte vorsteht.

Diese Maßnahme hat den Vorteil, daß die Kupplung in sehr einfacher Weise dadurch betätigt wird, daß beim Heranfahren des Handlingsystems durch mechanische Kontaktgabe die entsprechenden Elemente betätigt werden.

Bei einer Weiterbildung dieses Ausführungsbeispiels weist die Stange eine Vorderseite auf, die in Heranfahrrichtung mit der zweiten Bezugsmarke fluchtet.

Diese Maßnahme hat den bereits erwähnten Vorteil, daß das in Eingriff Bringen der Bezugsmarken einerseits und das Betätigen der Kupplung andererseits zeitlich synchronisiert ablaufen, ebenso wie die entsprechenden Lösevorgänge.

Eine gute Wirkung wird in diesem Zusammenhang weiter dadurch erzielt, daß die Stange in Längsrichtung verschiebbar in dem Arm gelagert ist und daß die Kupplung durch einen Abschnitt der Stange sowie durch eine dem Abschnitt zugeordnete Sitzfläche in der Übergabeplatte gebildet wird, die in einer ersten axialen Betriebsstellung der Stange den Abschnitt mit der Sitzfläche in einer Ebene quer zu der Heranfahrrichtung fixiert und in einer zweiten Betriebsstellung freigibt.

Diese Maßnahme hat den Vorteil, daß die Kupplung auf mechanisch äußerst einfache Weise realisiert wird, indem lediglich die Stange in axialer Richtung zwischen zwei Betriebsstellungen hin- und hergeschoben wird.

Dies gilt insbesondere dann, wenn gemäß einer Weiterbildung dieser Variante der Abschnitt und die Sitzfläche als komplementäre Konusse ausgebildet sind.

Diese Maßnahme hat den Vorteil, daß bei aneinander anliegenden Konussen eine zuverlässige mechanische Verriegelung innerhalb der Ebene gewährleistet ist, während andererseits bei axial auseinandergefahrenen Konussen in derselben Ebene genügend Spiel entlang der beiden Achsen gewährleistet ist, die die Ebene aufspannen.

In diesem Zusammenhang ist weiter bevorzugt, wenn die Stange unter der Kraft einer Feder in der ersten Betriebsstellung gehalten und die Feder beim Übergang zur zweiten Betriebsstellung zusammengedrückt wird.

Diese Maßnahme hat den Vorteil, daß während des gesamten Ein- und Ausfahrvorganges des Handlingsystems zwischen die Werkzeughälften die Kupplung durch die Feder in geschlossenem Zustand gehalten wird, so daß die Übergabeplatte mechanisch mit dem Handlingsystem bzw. Arm verrastet wird. Nur während der kurzen Zeitspanne der Übergabe an der vorbestimmten Werkzeughälfte wird die Feder zusammengedrückt und damit die Kupplung gelöst, was wiederum die elastische Lagerung der Übergabeplatte aktiviert.

Es ist weiterhin bei der erfindungsgemäßen Maschine bevorzugt, wenn die Übergabeplatte in dem Handlingsystem in Heranfahrrichtung des Handlingsystems an die vorbestimmte Werkzeughälfte fixiert ist.

Diese Maßnahme hat den Vorteil, daß Kupplungen einfacher Bauart durch axiales Verfahren des Handlingsystems betätigt werden können, wie dies bereits anhand der vorstehenden Ausführungsbeispiele erläutert wurde. Lediglich innerhalb der Ebene muß dabei eine Relativbewegung zwischen Übergabeplatte und Handlingsystem gewährleistet sein.

In diesem Zusammenhang ist konstruktiv bevorzugt, wenn die Übergabeplatte in der Heranfahrrichtung von einem Flansch des Handlingsystems umgriffen wird.

Diese Maßnahme hat den Vorteil, daß die vorgenannte axiale Fixierung in besonders einfacher Weise erreicht werden kann.

Bei Ausführungsbeispielen der erfindungsgemäßen Maschine ist hinsichtlich der Bezugsmarken bevorzugt, wenn diese beim in Eingriff Bringen formschlüssig ineinander greifen. Dies kann in an sich bekannter Weise dadurch bewerkstelligt werden, daß die Bezugsmarken als Bohrung, insbesondere Sackloch bzw. als Zapfen ausgebildet sind, wie dies an sich bekannt ist und bereits weiter oben erläutert wurde.

Wie bereits erwähnt wurde, beschränkt sich die Erfindung nicht auf den Anwendungsbereich von Kunststoff-Spritzgießmaschinen. Sämtliche vorgenannten Beispiele und Vorteile gelten daher auch für allgemeinere Anwendungsfälle von Handlingsystemen sowie für die angegebenen Verfahren zum Überführen eines Gegenstandes.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Seitenansicht, im Schnitt, eines Ausführungsbeispiels einer erfindungsgemäßen Kunststoff-Spritzgießmaschine mit geöffnetem Werkzeug und eingefahrenem Handlingsystem; und
- Fig. 2 und 3: eine Detaildarstellung eines Ausschnitts aus Fig. 1 für weitere Ausführungsbeispiele der Erfindung, in zwei unterschiedlichen Betriebsstellungen.

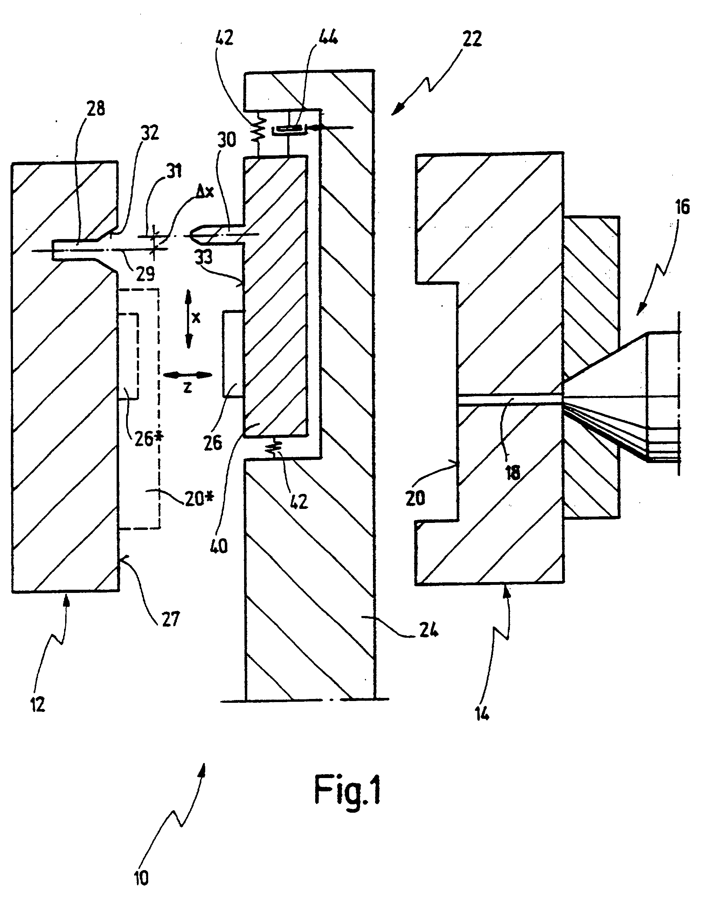

In Fig. 1 bezeichnet 10 insgesamt eine an sich herkömmliche Kunststoff-Spritzgießmaschine. Die Kunststoff-Spritzgießmaschine 10 weist eine erste Werkzeughälfte 12 sowie eine zweite Werkzeughälfte 14 auf. Diese sind in der Darstellung in Fig. 1 auseinandergefahren, was bedeutet, daß das Werkzeug sich in geöffnetem Zustand befindet.

Die zweite Werkzeughälfte 14 ist beim dargestellten Ausführungsbeispiel eine stationäre Werkzeughälfte, an der in Fig. 1 rechts ein herkömmlicher Extruder 16 angeschlossen ist, von dem flüssiges Kunststoffmaterial durch einen Kanal 18 zu einem mit 20 bezeichneten Formhohlraum zugeführt werden kann. Beim dargestellten Ausführungsbeispiel ist der Formhohlraum 20 nur in der zweiten Werkzeughälfte 14 ausgebildet. An der ersten Werkzeughälfte 12 ist mit gestrichelten Linien und 20* angedeutet, wo sich bei geschlossenem Werkzeug der Formhohlraum 20 befinden wird.

Zwischen die Werkzeughälften 12 und 14 ist in Fig. 1 ein insgesamt mit 22 bezeichnetes Handlingsystem eingefahren. Das Handlingsystem 22 ist an seinem vorderen Ende als Arm 24 ausgebildet. Mittels des Armes 24 kann ein Einlegeteil 26 vom Arm 24 zur ersten Werkzeughälfte 12 übergeben werden, indem das Einlegeteil 26 auf eine Oberfläche 27 aufgelegt wird, die dem Arm 24 zuweist.

In Fig. 1 ist die dazu erforderliche Axialbewegung des Arms 24 mit einem Doppelpfeil z gekennzeichnet, der die Heranfahrrichtung bzw. die Wegfahrrichtung des Armes 24 relativ zur ersten Werkzeughälfte 12_ symbolisiert. Die dazu senkrecht stehende Radialebene, in der der Arm 24 zwischen die Werkzeughälften 12, 14 eingefahren bzw. aus diesen herausgefahren wird, ist mit einem Doppelpfeil x bezeichnet.

Es sei auch an dieser Stelle darauf hingewiesen, daß im Rahmen der vorliegenden Beschreibung von Ausführungsbeispielen der Einsatzfall bei Kunststoff-Spritzgießmaschinen nur beispielhaft zu verstehen ist. Die Erfindung läßt sich darüber hinaus auch auf anderen Einsatzgebieten verwenden. Insoweit muß das Handlingsystem mit seinem Arm nicht an eine Werkzeughälfte sondern allgemein gesprochen an eine vorbestimmte Position heranfahren.

Es sei weiter nochmals darauf hingewiesen, daß sich die Anfahrvorgänge auch im Fall des Einsatzes bei Kunststoff-Spritzgießmaschinen nicht darauf beschränken, daß der Arm des Handlingsystems zwischen die geöffneten Werkzeughälften in den Bereich der Formhohlräume einfährt.

Dieselben Probleme treten nämlich vielmehr auch dann auf, wenn das Handlingsystem aus dem Werkzeug herausfährt und seine außerhalb der Spritzgießmaschine vorbestimmte Endposition einnimmt. Dort können sich z.B. weitere Stationen befinden, an die fertige Kunststoffgegenstände übergeben oder von denen Einlegeteile für einen nachfolgenden Spritzgießvorgang übernommen werden. Jedenfalls trägt eine präzise Ausgangsposition außerhalb der Spritzgießmaschine dazu bei, daß auch der Einfahrvorgang reproduzierbar stattfinden kann.

In Fig. 1 ist auf der Oberfläche 27 der ersten Werkzeughälfte 12 ebenfalls mit gestrichelten Linien eingezeichnet, wo das Einlegeteil 26* im geschlossenen Zustand des Werkzeuges im Formhohlraum 20* zu liegen kommt.

Es sei an dieser Stelle kurz darauf hingewiesen, daß der hier beschriebene Anwendungsfall des Einlegens eines Einlegeteils 26 nur beispielhaft zu verstehen ist, weil die Erfindung gesamthaft auch dann mit Vorteil eingesetzt werden kann, wenn es lediglich darum geht, fertig gespritzte Kunststoffteile aus dem Formhohlraum zu entnehmen.

Ferner sei darauf hingewiesen, daß unter "Einlegeteil" alle diejenigen Teile verstanden werden können, die weiter oben erwähnt worden sind. Das Einlegeteil 26 kann bspw. ein Satz von Kontaktelementen für einen elektrischen Stecker sein oder vieles andere mehr.

Es ist leicht einsehbar, daß es für die Qualität des im Formhohlraum 20* gespritzten Kunststoffteils wesentlich ist, daß sich das Einlegeteil 26* exakt in einer vorbestimmten Lage innerhalb des fertigen Kunststoffteils befindet. Aus diesem Grunde ist es erforderlich, sicherzustellen, daß das Einlegeteil 26 in einer genau definierten Sollposition auf der Oberfläche 27 abgesetzt wird.

Da es aus technischen Gründen bei vertretbarem Aufwand kaum realisierbar ist, die Bahnsteuerung des Armes 24 so präzise auszulegen, daß bereits durch externe Steuerung die erforderliche Lagepräzision hinsichtlich des Einlegeteils 26 gewährleistet werden kann, ist eine einfache mechanische Kontrolle vorgesehen.

Diese besteht daraus, daß in der Oberfläche 27 eine erste Bezugsmarke angebracht wird, bspw. in Form eines Sacklochs 28, dessen Achse mit 29 bezeichnet ist. Am Arm 24 befindet sich ein komplementär zum Sackloch 28 ausgebildeter Zapfen 30 als zweite Bezugsmarke. Die Achse des Zapfens 30 ist mit 31 bezeichnet.

Um ein Ineinandergreifen von Sackloch 28 und Zapfen 30 zu erleichtern, wenn die Achsen 29 und 31 nicht miteinander fluchten, wie in Fig. 1 mit Δx angedeutet, sind das Sackloch 28 mit einer Einführschräge 32 bzw. einem Einführkonus versehen und der Zapfen 30 kann vorne entsprechend angeschrägt sein.

Auf diese Weise wird der Arm 24 beim Heranfahren in z-Richtung an die erste Werkzeughälfte 12 angenähert und der Zapfen 30 in das Sackloch 21 eingeführt, wobei der Arm 24 dann an sich um den Versatz Δx in x-Richtung verschoben werden müßte, was einer mechanischen Zwängung gleich käme.

Aus diesem Grund ist derjenige Bereich einer Oberfläche 33 des Armes 24, aus dem der Zapfen 30 mit einer Vorderseite 34 vorsteht, als lose gelagerte Übergabeplatte 40 ausgebildet. In Fig. 1 ist dies dadurch symbolisiert, daß zwischen der Übergabeplatte 40 und dem umgebenden Arm 24 beispielsweise Federn 42 als elastische Lagerung eingeschaltet sind. Die Federn 42 lagern die Übergabeplatte 40 lose in der gesamten Radialebene x, d.h. auch senkrecht zur Zeichenebene von Fig. 1. Der Begriff "elastisch" ist in diesem Zusammenhang nur beispielhaft zu verstehen. Auch andere Arten einer möglichen Lagerung können ausgeführt werden, beispielsweise eine plastische Lagerung, eine gebremste Lagerung oder auch eine Lagerung ohne jeden Einfluß auf den Bewegungsablauf.

Infolge dieser losen Lagerung der Übergabeplatte 40 kann sich diese um den Betrag Ax in der x-Ebene verschieben, ohne daß dabei ein mechanischer Zwang auf den Arm 24 ausgeübt wird.

Andererseits hat die lose Lagerung der Übergabeplatte 40 im Arm 24 den Nachteil, daß die Übergabeplatte 40 sich bei dynamischen Belastungen innerhalb des Bewegungsbereiches der Federn 42 frei bewegen kann. In der Praxis bedeutet dies, daß die Übergabeplatte 40 bei jedem Beschleunigungs- und jedem Verzögerungsvorgang innerhalb der beweglichen Lagerung anschlägt und die lose Lagerung dadurch mit der Zeit beschädigt wird. Infolge dessen klappert die Übergabeplatte 40 im Arm 24, wenn dieser beim Ein- und Ausfahren mehrfach mit entsprechender Beschleunigung und Verzögerung verfahren wird. Man muß dabei bedenken, daß die Bewegungsvorgänge des Handlingsystems 22 so schnell wie möglich ablaufen sollen, um die Zykluszeit der Kunststoff-Spritzgießmaschine 10 so kurz wie möglich zu machen.

Erfindungsgemäß ist daher zwischen der Übergabeplatte 40 und dem Arm 24 eine schaltbare Kupplung 44 vorgesehen. Die Kupplung 44 wird bis auf kurze Zeitabschnitte geschlossen gehalten, so daß die Federn 42 und damit die lose Lagerung der Übergabeplatte 40 überbrückt werden. Bei geschlossener Kupplung 44 ist somit die Übergabeplatte 40 starr mit dem Arm 24 verbunden und kann ohne jede Beschränkung zusammen mit diesem verfahren werden.

Erst dann, wenn sich der Zapfen 30 an das Sackloch 28 annähert und ein Ausgleich hinsichtlich eines möglichen Lagefehlers Δx vorgenommen werden soll, wird die Kupplung 44 kurz geöffnet, so daß die Übergabeplatte 40 für den Übergabevorgang selbst kurzzeitig in den lose gelagerten Zustand versetzt wird. Sobald jedoch der Übergabevorgang abgeschlossen ist und sich der Arm 24 wieder von der ersten Werkzeughälfte 12 entfernen kann, wird die Kupplung 44 wieder geschlossen, so daß die Übergabeplatte 40 erneut starr mit dem Arm 24 verbunden ist.

Auf diese Weise wird erreicht, daß der Arm 24 bzw. das gesamte Handlingsystem 22 mit der maximal möglichen Geschwindigkeit, Beschleunigung und Verzögerung verfahren werden kann, andererseits aber eine Zwängung des Armes 24 infolge von Lagefehlern Δx nicht auftreten kann.

Es wurde bereits darauf hingewiesen, daß die Probleme von Lagefehlern auch außerhalb des Werkzeugs auftreten können, wenn das Handlingsystem mit seinem Arm eine äußere Endposition anfährt.

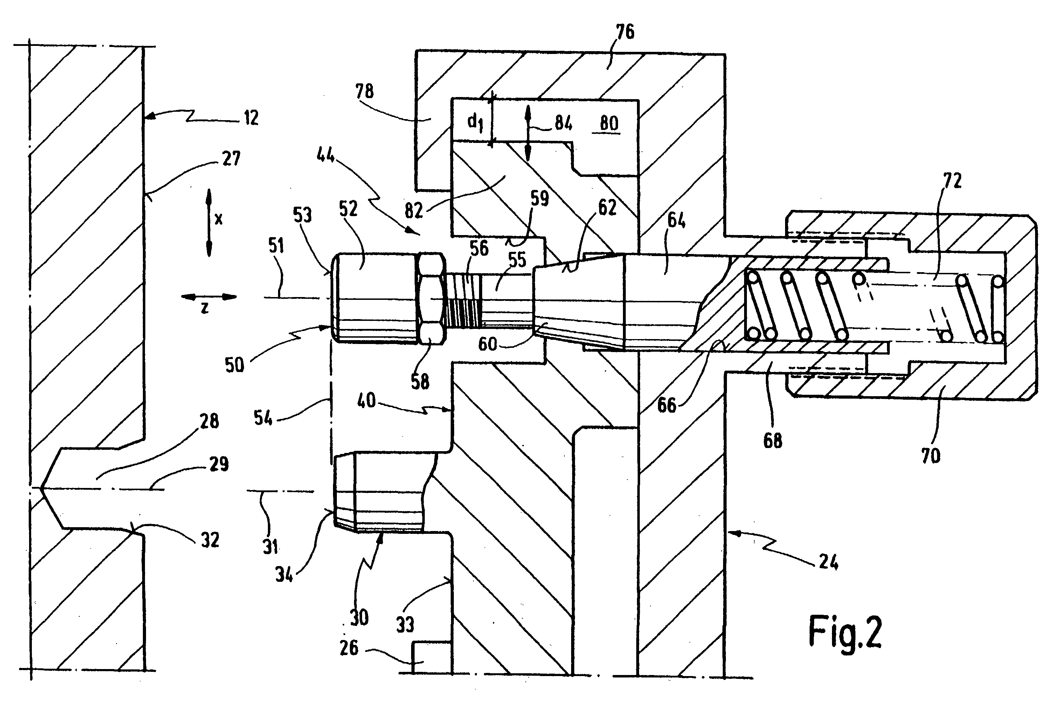

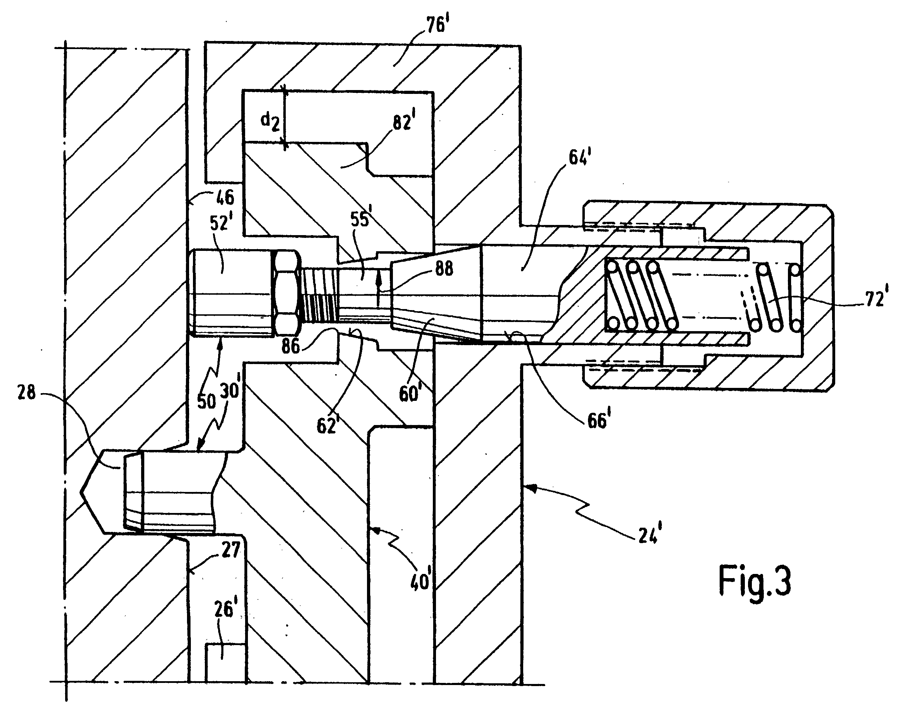

In den Fig. 2 und 3 sind weitere Einzelheiten von Ausführungsbeispielen der Kupplung 44 dargestellt.

Fig. 2 zeigt dabei den Zustand, bei dem der Arm 24 noch von der ersten Werkzeughälfte 12 beabstandet und die Kupplung 44 damit geschlossen ist.

Wie man aus Fig. 2 erkennen kann, besteht die Kupplung 44 im wesentlichen aus einer längsverschieblichen Stange 50, deren Längsachse mit 51 bezeichnet ist. Ein Kopf 42 der Stange 50 steht in Fig. 2 nach links über die Oberfläche 33 der Übergabeplatte 40 vor. Die Vorderseite des Kopfes 52 ist mit 53 bezeichnet. Mit einer strichpunktierten Linie 54 ist ferner angedeutet, daß die Vorderseite 53 des Kopfes 52 in dieser Betriebsstellung im wesentlichen mit der Vorderseite 34 des Zapfens 30 fluchtet.

An den Kopf 52 schließt sich in Fig. 2 nach rechts ein dünnerer zylindrischer Abschnitt 55 an, der im Bereich des Kopfes 52 mit einem Gewinde versehen ist. Auf diese Weise kann zu Justagezwecken der Kopf 52 in Axialrichtung 51 verlagert werden; worauf dann mittels einer Mutter 58 die justierte Stellung des Kopfes 52 auf der Stange 50 fixierbar ist.

Die Übergabeplatte 40 ist im Bereich des Kopfes 52 mit einer Aufnahme 59 versehen, in die der Kopf 52 zurückgedrückt werden kann, wie noch erläutert werden wird.

An den dünnen zylindrischen Abschnitt 55 schließt sich in Fig. 2 nach rechts ein konischer Abschnitt 60 an, der sich zum Kopf 52 hin verjüngt. Der konische Abschnitt 60 sitzt in der Betriebsstellung gemäß Fig. 2 in einer komplementär-konischen Sitzfläche 62 der Übergabeplatte 40.

An den konischen Abschnitt 60 schließt sich nach rechts ein zylindrischer Abschnitt 64 der Stange 50 an, der in einer zylindrischen Führung 66 des Armes 24 läuft. Insgesamt ist damit die Stange 50 entlang ihrer Achse 51 relativ zur Übergabeplatte 40 und zum Arm 24 verschiebbar.

Der Arm 24 geht im Bereich der zylindrischen Führung 66 in einen hülsenartigen Fortsatz 68 über, der nach rechts offen ist. Aus dem Fortsatz 68 ist eine Schraubkappe 70 aufgesetzt, die zu Justagezwecken auf dem Fortsatz 68 verdreht und damit axial verschoben werden kann. Zwischen Schraubkappe 70 und zylindrischem Abschnitt 64 befindet sich eine Schraubenfeder 72, die durch Verdrehen der Schraubkappe 70 in unterschiedlicher Weise vorgespannt werden kann.

An dem in Fig. 2 oberen Ende des Armes 24 ist ein in Axialrichtung vorlaufender Flansch 76 erkennbar, der an seinem vorderen Ende in einen Vorsprung 78 ausläuft. Der Vorsprung 78 umgreift die Übergabeplatte 40, so daß auf diese Weise eine formschlüssige Aufnahme 80 im Endbereich des Armes 24 für die Übergabeplatte 40 entsteht. Ein oberes freies Ende 82 der Übergabeplatte 40 ist damit in der Aufnahme 80 axial fixiert, kann aber in der x-Ebene verschoben werden.

Aus Fig. 2 folgt deutlich, daß die Übergabeplatte 40 in der in Fig. 2 dargestellten Stellung in der x-Ebene jedoch noch fixiert ist. Da nämlich der konische Abschnitt 60 dicht im komplementär-konischen Abschnitt 62 sitzt, kann sich das freie Ende 82 der Übergabeplatte 40 nicht in der mit einem Pfeil 84 bezeichneten Richtung bewegen, weil die Übergabeplatte 40 in der erwähnten Weise in der x-Ebene mit der Stange 50 verkoppelt ist und diese in der x-Ebene ebenfalls unbeweglich in der zylindrischen Führung 66 des Armes 24 sitzt. In dieser Position ist die Kupplung 44 daher geschlossen und der radiale Abstand des freien Endes 82 vom Flansch 76 beträgt d₁.

Während Fig. 2, wie bereits erwähnt, die bereits in Fig. 1 dargestellte Offenstellung darstellt, bei der der Arm 24 mit Übergabeplatte 40 von der ersten Werkzeughälfte 12 noch beabstandet ist, zeigt Fig. 3 den herangefahrenen Zustand. Darin sind gleiche Teile mit gleichen Bezugszeichen versehen. Verschobene Teile sind durch Hinzufügung eines Apostroph gekennzeichnet.

Wie man leicht durch Vergleich der Fig. 2 und 3 erkennen kann, setzt der Kopf 52 der Stange 50 mit seiner Vorderseite 53 infolge der Flucht 54 dann auf der Oberfläche 27 der ersten Werkzeughälfte 12 auf, wenn die Vorderseite 34 des Zapfens 30 gerade in die Einführschräge 32 der Sackbohrung 28 eintritt. Dies bedeutet, daß die Kupplung 44 in dem Augenblick aktiviert wird, wo die beiden Bezugsmarken, d.h. die Sackbohrung 28 und der Zapfen 30 ineinandergreifen. Es wurde bereits erwähnt, daß über die Verdrehung des Kopfes 52 eine gewisse axiale Justage dabei möglich ist.

Sobald der Kopf 52 auf der Oberfläche 27 aufsetzt und der Arm 24 seine Bewegung nach links fortsetzt, wird die Stange 50 relativ zur Übergabeplatte 40 und auch relativ zum Arm 24 nach rechts verschoben, und zwar gegen die Kraft der Feder 72. Sobald dies geschieht, hebt der konische Abschnitt 60 von der komplementär-konischen Sitzfläche 62 ab. Damit wird die Fixierung der Übergabeplatte 40 an den Arm 24 in der x-Ebene aufgehoben, die in der Stellung gemäß Fig. 2 noch vorhanden war.

Die Kupplung 44 ist im Zustand gemäß Fig. 3 somit geöffnet, weil sich der dünnere zylindrische Abschnitt 55' in der nunmehr frei gewordenen Öffnung 86 der komplementär-konischen Sitzfläche 62 in gewissen Grenzen in der x-Ebene bewegen kann. Beim dargestellten Ausführungsbeispiel in Fig. 3 hat sich z.B. die Übergabeplatte 40' relativ zum Arm 24' geringfügig nach unten bewegt, so daß nunmehr der Abstand des freien Endes 82' vom Flansch 76' d₂ ist, also größer ist als der Abstand d₁ in Fig. 2. Dies geschah deswegen, weil der Zapfen 30' gegenüber dem Sackloch 28 eine geringfügig nach oben versetzte Fehlstellung hatte (vgl. Δx in Fig. 1), mit der Folge, daß sich die Übergabeplatte 40' geringfügig nach unten bewegen mußte, bis der Zapfen 30' in das Sackloch 21 einfahren konnte.

In dieser Position ist eine lagegenaue Übergabe des Einlegeteils 26' auf die Oberfläche 27 gewährleistet.

Wenn nun der Arm 24' aus der Position gemäß Fig. 3 wieder nach rechts verfahren wird und der Zapfen 30' aus dem Sackloch 28 herausgleitet, so schiebt sich der konische Abschnitt 60' wieder in die komplementär-konische Sitzfläche 62', mit der Folge, daß die ursprüngliche Position gemäß Fig. 2 wieder hergestellt wird und die Übergabeplatte 40 im Arm 24 in der x-Ebene verrastet ist.

## Patentansprüche

1. Kunststoff-Spritzgießmaschine mit einem mindestens zwei Werkzeughälften (12, 14) umfassenden Werkzeug und einem bei geöffnetem Werkzeug zwischen die Werkzeughälften (12, 14) einfahrbaren Handlingsystem (22) zum Überführen eines Gegenstandes (26) zwischen dem Handlingsystem (22) und einer vorbestimmten Werkzeughälfte (12), wobei das Handlingsystem (22) eine in ihm lose gelagerte Übergabeplatte (40) umfaßt und das Handlingsystem (22) derart an die vorbestimmte Werkzeughälfte (12) heranfahrbar (z) ist, daß vor der Übergabe des Gegenstandes (26) eine an der vorbestimmten Werkzeughälfte (12) befindliche erste Bezugsmarke (28) mit einer an der Übergabeplatte (40) befindlichen zweiten Bezugsmarke (30) in Eingriff bringbar ist, **dadurch gekennzeichnet, daß** die lose Lagerung mittels einer Kupplung (44) überbrückbar ist.

2. Kunststoff-Spritzgießmaschine nach Anspruch 1, **dadurch gekennzeichnet, daß** die Übergabeplatte (40) im Handlingsystem (22) mittels elastischer Elemente (42) gelagert ist, und daß die elastischen Elemente (42) mittels der Kupplung (44) überbrückbar sind.

3. Kunststoff-Spritzgießmaschine nach Anspruch 1 oder 2, **dadurch gekennzeichnet, daß** die Übergabeplatte (40) in einem Arm (24) des Handlingsystems (22) gelagert ist.

4. Kunststoff-Spritzgießmaschine nach einem oder mehreren der Ansprüche 1 bis 4, **dadurch gekennzeichnet, daß** die vorbestimmte Werkzeughälfte (12) eine in Offenstellung des Werkzeugs frei liegende Oberfläche (27) aufweist und daß die Übergabeplatte (40) in der von der Oberfläche (27) aufgespannten Ebene (x) beweglich gelagert ist.

5. Kunststoff-Spritzgießmaschine nach einem oder mehreren der Ansprüche 1 bis 4, **dadurch gekennzeichnet, daß** die Kupplung (44) zeitlich überschneidend mit dem Ineingriffbringen der Bezugsmarken (28, 30) lösbar ist.

6. Kunststoff-Spritzgießmaschine nach einem oder mehreren der Ansprüche 1 bis 5, **dadurch gekennzeichnet, daß** die Kupplung (44) zeitlich überschneidend mit einem Außereingriffbringen der Bezugsmarken (28, 30) überbrückbar ist.

7. Kunststoff-Spritzgießmaschine nach einem oder mehreren der Ansprüche 1 bis 6, **dadurch gekennzeichnet, daß** die Kupplung (44) selbsttätig beim Heranfahren des Handlingsystems (22) an die vorbestimmte Werkzeughälfte (12) lösbar ist.

8. Kunststoff-Spritzgießmaschine nach Anspruch 7, **dadurch gekennzeichnet, daß** die Kupplung (44) mittels einer relativ zur Übergabeplatte (40) in Heranfahrrichtung (z) des Handlingsystems (22) an die vorbestimmte Werkzeughälfte (12) längsverschieblichen Stange (50) verschiebbar ist, die aus einer der vorbestimmten Werkzeughälfte (12) gegenüberliegenden Oberfläche (33) der Übergabeplatte (40) vorsteht.

9. Kunststoff-Spritzgießmaschine nach Anspruch 8, **dadurch gekennzeichnet, daß** die Stange (50) eine Vorderseite (53) aufweist, die in der Heranfahrrichtung (z) mit der zweiten Bezugsmarke (30) fluchtet (34).

10. Kunststoff-Spritzgießmaschine nach Anspruch 8 oder 9, **dadurch gekennzeichnet, daß** die Stange (50) in Längsrichtung verschiebbar in dem Arm (24) gelagert ist, und daß die Kupplung (44) durch einen Abschnitt (60) der Stange (50) sowie durch eine dem Abschnitt (60) zugeordnete Sitzfläche (62) in der Übergabeplatte (60) gebildet wird, die in einer ersten axialen Betriebsstellung der Stange (50) den Abschnitt (60) mit der Sitzfläche (62) in einer Ebene (x) quer zu der Heranfahrrichtung (z) fixiert und in einer zweiten Betriebsstellung freigibt.

11. Kunststoff-Spritzgießmaschine nach Anspruch 10, **dadurch gekennzeichnet, daß** der Abschnitt (60) und die Sitzfläche (62) als komplementäre Konusse ausgebildet sind.

12. Kunststoff-Spritzgießmaschine nach Anspruch 10 oder 11, **dadurch gekennzeichnet, daß** die Stange (50) unter der Kraft einer Feder (72) in der ersten Betriebsstellung gehalten und daß die Feder (72) beim Übergang zur zweiten Betriebsstellung zusammengedrückt wird.

13. Kunststoff-Spritzgießmaschine nach einem oder mehreren der Ansprüche 1 bis 12, **dadurch gekennzeichnet, daß** die Übergabeplatte (40) in dem Handlingsystem (22) in Heranfahrrichtung (z) des Handlingsystems (22) an die vorbestimmte Werkzeughälfte (12) fixiert ist.

14. Kunststoff-Spritzgießmaschine nach Anspruch 13, **dadurch gekennzeichnet, daß** die Übergabeplatte (40) in der Heranfahrrichtung (z) von einem Flansch (76, 78) des Handlingsystems (22) umgriffen wird.

15. Kunststoff-Spritzgießmaschine nach einem oder mehreren der Ansprüche 1 bis 14 , **dadurch gekennzeichnet, daß** die Bezugsmarken (28, 30) beim Ineingriffbringen formschlüssig ineinander greifen.

16. Kunststoff-Spritzgießmaschine nach Anspruch 15, **dadurch gekennzeichnet, daß** die Bezugsmarken (28, 30) als Bohrung, insbesondere Sackloch (28) bzw. als Zapfen (30) ausgebildet sind.

17. Handlingsystem mit Mitteln zum Überführen eines Gegenstandes (26) zwischen dem Handlingsystem (22) und einer vorbestimmten Position, wobei das Handlingsystem (22) eine in ihm lose gelagerte Übergabeplatte (40) umfaßt und derart an die vorbestimmte Position heranfahrbar (z) ist, daß vor der Übergabe des Gegenstandes (26) eine an der vorbestimmten Position befindliche erste Bezugsmarke (28) mit einer an der Übergabeplatte (40) befindlichen zweiten Bezugsmarke (30) in Eingriff bringbar ist, **dadurch gekennzeichnet, daß** die lose Lagerung mittels einer Kupplung (44) überbrückbar ist.

18. Verfahren zum Überführen eines Gegenstandes (26) zwischen einem Handlingsystem (22) und einer vorbestimmten Werkzeughälfte (12) einer Kunststoff-Spritzgießmaschine, die ein Werkzeug mit mindestens zwei Werkzeughälften (12, 14) umfasst und bei der bei geöffnetem Werkzeug ein Handlingsystem (22) zwischen die Werkzeughälften (12, 14) eingefahren wird, wobei das Handlingsystem (22) eine in ihm lose gelagerte Übergabeplatte (40) umfaßt und das Handlingsystem (22) derart an die vorbestimmte Werkzeughälfte (12) herangefahren (z) wird, daß vor der Übergabe des Gegenstandes (26) eine an der vorbestimmten Werkzeughälfte (12) befindliche erste Bezugsmarke (28) mit einer an der Übergabeplatte (40) befindlichen zweiten Bezugsmarke (30) in Eingriff gebracht wird, **dadurch gekennzeichnet, daß** die lose Lagerung mindestens beim Einfahren des Handlingsystems zwischen die Werkzeughälften (12, 14) überbrückt wird.

19. Verfahren nach Anspruch 18, **dadurch gekennzeichnet, daß** die Kupplung (44) zeitlich überschneidend mit dem Ineingriffbringen der Bezugsmarken (28, 30) gelöst wird.

20. Verfahren nach Anspruch 18 oder 19, **dadurch gekennzeichnet, daß** die Kupplung (44) zeitlich überschneidend mit einem Außereingriffbringen der Bezugsmarken (28, 30) überbrückt wird.

21. Verfahren nach einem oder mehreren der Ansprüche 18 bis 20, **dadurch gekennzeichnet, daß** die Kupplung (44) selbsttätig beim Heranfahren des Handlingsystems (22) an die vorbestimmte Werkzeughälfte (12) geöffnet wird.

22. Verfahren zum Überführen eines Gegenstandes (26) zwischen einem Handlingsystem (22) und einer vorbestimmten Position, wobei das Handlingsystem (22) eine in ihm lose gelagerte Übergabeplatte (40) umfaßt und derart an die vorbestimmte Position herangefahren (z) wird, daß vor der Übergabe des Gegenstandes (26) eine an der vorbestimmten Position befindliche erste Bezugsmarke (28) mit einer an der Übergabeplatte (40) befindlichen zweiten Bezugsmarke (30) in Eingriff gebracht wird, **dadurch gekennzeichnet, daß** die lose Lagerung mindestens beim Anfahren der vorbestimmten Position überbrückt wird.

## Claims

1. A plastics injection moulding machine having a mould comprising at least two mould halves (12, 14) and a handling system (22) which may be introduced between the mould halves (12, 14) when the mould is open for transferring an article (26) between the handling system (22) and a predetermined mould half (12), wherein the handling system (22) comprises a transfer plate (40) mounted loosely therein and the handling system (22) may be brought up (z) to the predetermined mould half (12) in such a way that, prior to transfer of the article (26), a first reference mark (28) located on the predetermined mould half (12) may be brought into engagement with a second reference mark (30) located on the transfer plate (40), **characterised in that** the loose mounting arrangement may be bypassed by means of a clutch (44).

2. A plastics injection moulding machine according to claim 1, **characterised in that** the transfer plate (40) is mounted in the handling system (22) by means of resilient elements (42), and **in that** the resilient elements (42) may be bypassed by means of the clutch (44).

3. A plastics injection moulding machine according to claim 1 or claim 2, **characterised in that** the transfer plate (40) is mounted in an arm (24) of the handling system (22).

4. A plastics injection moulding machine according to one or more of claims 1 to 4, **characterised in that** the predetermined mould half (12) comprises a surface (27) which is exposed when the mould is in the open position and **in that** the transfer plate (40) is mounted so as to be movable in the plane (x) opened out by the surface (27).

5. A plastics injection moulding machine according:to one or more of claims 1 to 4, **characterised in that** release of the clutch (44) may overlap in time with engagement of the reference marks (28, 30).

6. A plastics injection moulding machine according to one or more of claims 1 to 5, **characterised in that** bypassing of the clutch (44) may overlap in time with disengagement of the reference marks (28, 30).

7. A plastics injection moulding machine according to one or more of claims 1 to 6, **characterised in that** the clutch (44) may be released automatically when the handling system (22) approaches the predetermined mould half (12).

8. A plastics injection moulding machine according to claim 7, **characterised in that** the clutch (44) may be displaced by means of a rod (50) displaceable longitudinally relative to the transfer plate (40) in the direction (z) in which the handling system (22) approaches the predetermined mould half (12), which rod (50) projects out of a surface (33) of the transfer plate (40) lying opposite the predetermined mould half (12).

9. A plastics injection moulding machine according to claim 8, **characterised in that** the rod (50) comprises a front (53), which is aligned (34) with the second reference mark (30) in the approach direction (z).

10. A plastics injection moulding machine according to claim 8 or claim 9, **characterised in that** the rod (50) is mounted longitudinally displaceably in the arm (24), and **in that** the clutch (44) is formed by a portion (60) of the rod (50) and by a seat (62), associated with the portion (60), in the transfer plate (60), which fixes the portion (60) with the seat (62) in a plane (x) perpendicular to the approach direction (z) in a first axial operating position of the rod (50) and releases it in a second operating position.

11. A plastics injection moulding machine according to claim 10, **characterised in that** the portion (60) and the seat (62) take the form of complementary cones.

12. A plastics injection moulding machine according to claim 10 or claim 11, **characterised in that** the rod (50) is held in the first operating position through the force of a spring (72) and **in that** the spring (72) is compressed upon transition into the second operating position.

13. A plastics injection moulding machine according to one or more of claims 1 to 12, **characterised in that** the transfer plate (40) is fixed in the handling system (22) in the direction (z) in which the handling system (22) approaches the predetermined mould half (12).

14. A plastics injection moulding machine according to claim 13, **characterised in that** the transfer plate (40) is encompassed by a flange (76, 78) of the handling system (22) in the approach direction (z).

15. A plastics injection moulding machine according to one or more of claims 1 to 14, **characterised in that** the reference marks (28, 30) engage form-fittingly in one another when brought into engagement.

16. A plastics injection moulding machine according to claim 15, **characterised in that** the reference marks (28, 30) take the form of a drill hole, in particular a blind hole (28), and a peg (30).

17. A handling system having means for transferring an article (26) between the handling system (22) and a predetermined position, wherein the handling system (22) comprises a transfer plate (40) mounted loosely therein and may be brought up (z) to the predetermined position in such a way that, prior to transfer of the article (26), a first reference mark (28) located at the predetermined position may be brought into engagement with a second reference mark (30) located on the transfer plate (40), **characterised in that** the loose mounting arrangement may be bypassed by means of a clutch (44).

18. A method for transferring an article (26) between a handling system (22) and a predetermined mould half (12) of a plastics injection moulding machine, which comprises a mould having at least two mould halves (12, 14) and in which a handling system (22) is introduced between the mould halves (12, 14) when the mould is open, wherein the handling system (22) comprises a transfer plate (40) mounted loosely therein and the handling system (22) is brought up (z) to the predetermined mould half (12) in such a way that, prior to transfer of the article (26), a first reference mark (28) located on the predetermined mould half (12) is brought into engagement with a second reference mark (30) located on the transfer plate (40), **characterised in that** the loose mounting arrangement is bypassed at least when the handling system is introduced between the mould halves (12, 14).

19. A method according to claim 18, **characterised in that** release of the clutch (44) overlaps in time with engagement of the reference marks (28, 30).

20. A method according to claim 18 or claim 19, **characterised in that** bypassing of the clutch (44) overlaps in time with disengagement of the reference marks (28, 30).

21. A method according to one or more of claims 18 to 20, **characterised in that** the clutch (44) is opened automatically when the handling system (22) approaches the predetermined mould half (12).

22. A method for transferring an article (26) between a handling system (22) and a predetermined position, wherein the handling system (22) comprises a transfer plate (40) mounted loosely therein and is brought up (z) to the predetermined position in such a way that, prior to transfer of the article (26), a first reference mark (28) located at the predetermined position is brought into engagement with a second reference mark (30) located on the transfer plate (40), **characterised in that** the loose mounting arrangement is bypassed at least when the predetermined position is approached.

## Revendications

1. Machine de moulage par injection de matière plastique comportant un moule comprenant au moins deux moitiés de moule (12, 14) et un système de manipulation (22) pouvant être rentré entre les deux moitiés de moule (12, 14) lorsque le moule est ouvert pour transférer un objet (26) entre le système de manipulation (22) et une moitié de moule prédéterminée (12), le système de manipulation (22) comprenant une plaque de transfert (40) positionnée de manière flottante à l'intérieur de celui-ci et le système de manipulation (22) pouvant être approché (z) de la moitié de moule prédéterminée (12) de manière à ce que, avant le transfert de l'objet (26), une première marque de référence (28) située sur la moitié de moule prédéterminée (12) puisse être mise en prise avec une deuxième marque de référence (30) située sur la plaque de transfert 40), **caractérisée en ce que** le positionnement flottant peut être surmonté au moyen d'un accouplement (44).

2. Machine de moulage par injection de matière plastique suivant la revendication 1, **caractérisée en ce que** la plaque de transfert (40) est positionnée dans le système de manipulation (22) au moyen d'éléments élastiques (42) et **en ce que** les éléments élastiques (42) peuvent être surmontés au moyen de l'accouplement (44).

3. Machine de moulage par injection de matière plastique suivant la revendication 1 ou 2, **caractérisée en ce que** la plaque de transfert (40) est positionnée dans un bras (24) du système de manipulation (22).

4. Machine de moulage par injection de matière plastique suivant une ou plusieurs des revendications 1 à 4, **caractérisée en ce que** la moitié de moule prédéterminée (12) présente une surface libre (27) en position ouverte du moule et **en ce que** la plaque de transfert (40) est positionnée de manière mobile sur le plan (x) bloqué par la surface (27).

5. Machine de moulage par injection de matière plastique suivant une ou plusieurs des revendications 1 à 4, **caractérisée en ce que** l'accouplement (44) est détachable de manière recoupée dans le temps avec la mise en prise des marques de référence (28, 30).

6. Machine de moulage par injection de matière plastique suivant une ou plusieurs des revendications 1 à 5, **caractérisée en ce que** l'accouplement peut être surmonté de manière recoupée dans le temps avec une sortie de prise des marques de référence (28,30).

7. Machine de moulage par injection de matière plastique suivant une ou plusieurs des revendications 1 à 6, **caractérisée en ce que** l'accouplement (44) est détachable de manière autonome lors de l'approche du système de manipulation (22) vers la moitié de moule prédéterminée (22).

8. Machine de moulage par injection de matière plastique suivant la revendication 7, **caractérisée en ce que** l'accouplement (44) peut être déplacé au moyen d'une barre (50), mobile longitudinalement par rapport à la plaque de transfert (40) dans le sens de l'approche (z) du système de manipulation (22) vers la moitié de moule prédéterminée (12), laquelle barre dépasse d'une surface (33) de la plaque de transfert (40) opposée à la moitié de moule prédéterminée (12).

9. Machine de moulage par injection de matière plastique suivant la revendication 8, **caractérisée en ce que** la barre (50) présente un côté avant (53) qui s'aligne avec la deuxième marque de référence (30) dans le sens de l'approche (z).

10. Machine de moulage par injection de matière plastique suivant la revendication 8 ou 9, **caractérisée en ce que** la barre (50) est positionnée dans le bras (24) de manière à se déplacer dans le sens longitudinal et **en ce que** l'accouplement (44) est formé par un tronçon (60) de la barre (50) ainsi que par une face d'appui (62), associée au tronçon (60), dans la plaque de transfert (60) qui, dans une première position de fonctionnement axiale de la barre (50) immobilise le tronçon (60) avec la face d'appui (62) sur un plan (x) transversalement à la direction d'approche (z) et le libère dans une deuxième position de fonctionnement.

11. Machine de moulage par injection de matière plastique suivant la revendication 10, **caractérisée en ce que** le tronçon (60) et la face d'appui (62) sont conformés en cônes complémentaires.

12. Machine de moulage par injection de matière plastique suivant la revendication 10 ou 11, **caractérisée en ce que** la barre (50) est maintenue dans la première position de fonctionnement sous la force d'un ressort (72) et **en ce que** le ressort (72) est compressé lors du passage à la deuxième position de fonctionnement.

13. Machine de moulage par injection de matière plastique suivant une ou plusieurs des revendications 1 à 12, **caractérisée en ce que** la plaque de transfert (40) est immobilisée dans le système de manipulation (22) dans la direction d'approche (z) du système de manipulation (22) vers la moitié d'outil prédéterminée (12).

14. Machine de moulage par injection de matière plastique suivant la revendication 13, **caractérisée en ce que** la plaque de transfert (40) est enserrée, dans la direction d'approche (z) par une bride (76, 78) du système de manipulation (22).

15. Machine de moulage par injection de matière plastique suivant une ou plusieurs des revendications 1 à 14, **caractérisée en ce que** les marques de référence (28, 30) prennent l'une dans l'autre par concordance de forme lors de la mise en prise.

16. Machine de moulage par injection de matière plastique suivant la revendication 15, **caractérisée en ce que** les marques de référence (28, 30) sont conformées en alésage, en particulier en trou borgne (28) ou en téton (30).

17. Système de manipulation comportant des moyens pour le transfert d'un objet (26) entre le système de manipulation (22) et une position prédéterminée, le système de manipulation (22) comprenant une plaque de transfert (40) positionnée dans celui-ci de manière flottante et pouvant être approché (z) de la position prédéterminée de manière à ce que, avant le transfert de l'objet (26) une première marque de référence (28) située sur la position prédéterminée puisse être mise en prise avec une deuxième marque de référence (30) située sur la plaque de transfert (40), **caractérisé en ce que** le positionnement flottant peut être surmonté au moyen d'un accouplement (44).

18. Procédé de transfert d'un objet (26) entre un système de manipulation (22) et une moitié de moule prédéterminée (12) d'une machine de moulage par injection de matière plastique qui comprend un outil comportant au moins deux moitiés de moule (12, 14) et sur laquelle, lorsque le moule est ouvert, un système de manipulation (22) rentre entre les deux moitiés de moule (12, 14), le système de manipulation (22) comprenant une plaque de transfert (40) positionnée dans celui-ci de manière flottante et le système de manipulation (22) étant approché (z) de la moitié de moule prédéterminée (12) de manière à ce que, avant le transfert de l'objet (26), une première marque de référence (28) située sur la moitié de moule prédéterminée (12) est amenée en prise avec une deuxième marque de référence (30) située sur la plaque de transfert (40), **caractérisé en ce que** le positionnement flottant est surmonté au moins lors de la rentrée du système de manipulation entre les moitiés de moule (12, 14).

19. Procédé selon la revendication 18, **caractérisé en ce que** l'accouplement (44) est détaché de manière recoupée dans le temps avec la mise en prise des marques de référence (28, 30).

20. Procédé selon la revendication 18 ou 19, **caractérisé en ce que** l'accouplement (44) est surmonté de manière recoupée dans le temps avec la sortie de prise des marques de référence (28, 30).

21. Procédé selon l'une ou plusieurs des revendications 18 à 20, **caractérisé en ce que** l'accouplement (44) est ouvert de manière autonome lors de l'approche du système de manipulation (22) vers la moitié de moule prédéterminée (12).

22. Procédé de transfert d'un objet (26) entre un système de manipulation (22) et une position prédéterminée, le système de manipulation (22) comprenant une plaque de transfert (40) positionnée de manière flottante dans celui-ci et étant approché (z) de la position prédéterminée de manière à ce que, avant le transfert de l'objet (26), une première marque de référence (28), située sur la position prédéterminée, soit mise en prise avec une deuxième marque de référence (30) située sur la plaque de transfert (40), **caractérisé en ce que** le positionnement flottant est surmonté au moins lors de l'approche de la position prédéterminée.
